# FASCICULE DE BREVET EUROPEEN

(11) **EP 0 517 897 B1**
(45) Date de publication et mention de la délivrance du brevet: **22.05.1996**
(21) Numéro de dépôt: 92903486.6
(22) Date de dépôt: 26.12.1991
(51) Int. Cl.: F16L 35/00, H02G 15/14, H01R 13/56

(54) **RAIDISSEUR A STRUCTURE RENFORCEE**
VERSTEIFUNG MIT EINER VERSTÄRKTEN STRUKTUR
STIFFENER WITH REINFORCED STRUCTURE

(30) Priorité: 26.12.1990 FR 9016276
(43) Date de publication de la demande: 16.12.1992
(73) Titulaire: COFLEXIP, F-92100 Boulogne-Billancourt (FR)
(72) Inventeur: MALOBERTI, René, F-94500 Champigny (FR)
(74) Mandataire: Leszczynski, André
(86) Numéro de dépôt international: FR9101073
(87) Numéro de publication internationale: WO9212376

(56) Documents cités:
- GB-A- 2 040 014
- US-A- 3 831 635
- US-A- 4 367 967
- US-A- 4 794 957

## Description

La présente invention se rapporte à un raidisseur ayant une structure renforcée.

Il existe divers types de corps allongés de grande longueur par rapport à leur diamètre et présentant une grande résistance et une grande raideur axiale en regard d'une raideur en flexion faible. On peut citer à titre d'exemples de tels corps allongés, des conduites tubulaires flexibles pour véhiculer des fluides, par exemple des hydrocarbures, des ombilicaux, des câbles électriques armés, ou des câbles d'ancrage. Ces types de corps seront appelés corps allongés dans la suite de ce brevet.

Les corps allongés peuvent être endommagés par une flexion, ou des flexions répétées s'ils ont un rayon de courbure trop faible. On est donc amené à imposer un rayon de courbure minimal aux corps allongés. Une des techniques pour imposer un rayon de courbure minimal aux corps allongés consiste à les équiper avec des raidisseurs sur la portion du corps allongé susceptible de subir la flexion risquant de provoquer sa détérioration. Cette portion correspond par exemple à la liaison avec un embout au niveau d'une plate-forme d'exploitation pétrolière en mer d'une conduite tubulaire flexible verticale de remontée d'hydrocarbures.

Un premier exemple de raidisseur de type connu est un cône en polyuréthane surmoulé autour de l'extrémité d'un corps allongé et de son embout. Le moulage s'effectue à chaud. La polymérisation du polyuréthane provoque un retrait qui produit une constriction et un frettage de l'embout par le raidisseur. Le frettage améliore l'adhérence du raidisseur sur l'embout. Cette adhérence peut être augmentée par un traitement de surface de l'embout par exemple par la présence d'aspérités ou de gorges sur celui-ci.

Toutefois, ce type de raidisseur présente de nombreux inconvénients.

Tout d'abord, le raidisseur est moulé directement autour d'un embout d'une conduite tubulaire flexible terminée. Ainsi, un problème survenant lors du surmoulage du raidisseur risque d'endommager la conduite tubulaire flexible elle même, qui est un produit extrêmement cher. Ce risque n'est pas négligeable d'autant plus que les raidisseurs de types connus présentent des masses énormes, par exemple de 900 kg (de polyuréthane). Dans le cas où seul le raidisseur a été mal réalisé, sans pour autant abimer la conduite tubulaire flexible, il est quand même nécessaire de détruire le raidisseur pour libérer la conduite tubulaire flexible, en vue du moulage d'un nouveau raidisseur. La destruction d'un raidisseur de plusieurs centaines de kilos, en polyuréthane, est une opération longue et coûteuse. Cela d'autant plus qu'il est nécessaire de prendre toutes les précautions qui s'imposent pour ne pas abîmer, lors de cette opération, la conduite tubulaire flexible. Toutes ces manipulations ne sont pas faites en temps masqué, c'est à dire qu'il est impossible de les effectuer pendant le même temps que la fabrication de la conduite tubulaire flexible. Ainsi la réalisation du raidisseur induit un retard incompressible augmentant le délai nécessaire à la réalisation d'une conduite tubulaire flexible équipée d'un raidisseur.

Par ailleurs, le raidisseur de type connu présente un manque de rigidité à l'encastrement, se traduisant par une diminution des performances, c'est-à-dire une diminution locale du rayon de courbure. Le manque de rigidité à l'encastrement a conduit pour des raidisseurs du type connu, à réaliser des surépaisseurs au niveau de l'encastrement. Ces surépaisseurs augmentent l'encombrement et le coût de fabrication et de manutention de ces raidisseurs.

Pour remédier aux problèmes de ces raidisseurs, diverses solutions ont été proposées.

Tout d'abord, on fabrique le cône de polyuréthane du raidisseur et on l'enfile sur la conduite tubulaire flexible avant le montage de l'embout. On effectue ensuite le montage de l'embout. On fait coulisser le raidisseur de façon à ce qu'il entoure l'embout monté.

Cette réalisation ne permet plus de bénéficier de la constriction du raidisseur autour de l'embout, avec effet de frettage résultant du rétreint du polyuréthane autour de l'embout. De plus, il n'est plus possible de réaliser des rayures ou des gorges autour d'un embout qui est toujours de forme sensiblement cylindrique. L'absence de frettage augmente les concentrations des contraintes de cisaillement entre le raidisseur et l'embout, et par conséquent les risques de fissurations en fatigue au regard de la durée de vie, qui est dans la pratique de 5 à 20 ans.

Une réalisation plus performante de raidisseur consiste à surmouler le raidisseur en polyuréthane autour d'un insert ayant une forme interne correspondant à la forme externe de l'embout. Ainsi, on obtient des effets de frettage du polyuréthane autour de l'insert, avec possibilité de montage avec un jeu minimum entre le raidisseur et l'embout. Le contact embout-insert est réalisable dans de bonnes conditions, dans la mesure où c'est un contact métal sur métal. Le dispositif de type connu est démontable et réalisable en temps masqué, ce qui permet le contrôle et limite les manipulations du produit fini.

Toutefois, on n'a toujours pas optimisé l'encastrement du raidisseur sur l'embout.

On connaît par US-A-4 367 967 un raidisseur comportant un élément élastique en élastomère destiné à entourer un corps allongé à rigidifier, ledit élément élastique pouvant être rendu solidaire d'un support d'encastrement comportant notamment un embout monté sur ledit corps allongé ou un tube rigide entourant ledit corps allongé, ledit raidisseur comportant une armature s'étendant à l'intérieur dudit élément élastique, sur une partie de la longueur de celui-ci, depuis une extrémité de l'élément élastique, et des moyens de fixation pour solidariser ladite armature au-dit support d'encastrement, à son extrémité située au niveau de ladite extrémité de l'élément élastique.

Dans ce document, l'armature est constituée d'éléments discontinus qui se chevauchent axialement. Une telle réalisation de l'armature ne permet pas au raidisseur d'assurer une partie importante de la résistance aux efforts axiaux de traction et de compression associés au moment de flexion supporté par le raidisseur lorsque le corps allongé autour duquel il est mis en place est mis en flexion.

La présente invention permet précisément d'éviter un tel inconvénient en augmentant la valeur maximale admissible dudit moment de flexion et augmentant de ce fait la rigidité à la flexion du raidisseur encastré sur son support.

Selon l'invention l'armature est axialement continue sur toute sa longueur.

La présente invention repose sur la constatation que l'encastrement du raidisseur, par exemple au niveau de l'embout, fait supporter au matériau du raidisseur des efforts de traction-compression et qu'une amélioration des performances peut être obtenue en équipant le raidisseur de dispositifs aptes à participer, avec une déformation négligeable, aux efforts de traction axiaux provoqués par la flexion du corps allongé.

On entend par "encastrement" une liaison mécanique rigide notamment en flexion, translation, rotation, entre le raidisseur et un support d'encastrement.

Le support d'encastrement est constitué par une structure, ou un élément de structure, avec lequel le raidisseur est solidarisé, ledit support d'encastrement étant, de façon relative, fixe par rapport au corps allongé. De façon absolue, le support d'encastrement peut, soit être fixe, c'est-à-dire lié à un support extérieur immobile, soit mobile.

Le support d'encastrement, dans le cas d'une conduite tubulaire flexible peut comprendre l'embout de la conduite.

L'encastrement du raidisseur sur le support d'encastrement peut être direct. Par exemple, le raidisseur peut être encastré autour d'un embout, sa paroi interne est directement encastrée autour de l'embout. Avantageusement, cet encastrement met en oeuvre un insert qui constitue une partie de la paroi interne du raidisseur et dont la forme interne correspond à la forme externe de l'embout.

Selon l'invention, le raidisseur peut être mis en place sur le support d'encastrement sans insert. Dans ce cas, le raidisseur est moulé autour du corps allongé avec un jeu radial très faible de préférence nul.

L'encastrement peut aussi utiliser des moyens d'encastrement intermédiaires. Le support d'encastrement peut comprendre un tube rigide entourant à jeu, sur une partie de sa longueur, une conduite tubulaire flexible. Le support d'encastrement peut comporter un bras solidarisé avec une plate-forme de surface d'exploitation pétrolière.

Les déformations du corps allongé peuvent être statiques ou dynamiques, par exemple sous l'action de la houle et du courant, ou en fonction des déplacements du support extérieur mobile sur lequel est fixé le support d'encastrement. Le support d'encastrement peut comprendre un organe monté directement et rigidement sur le corps allongé. Par exemple il comprend un embout monté à l'extrémité de la partie à rigidifier du corps allongé, ou un collier serré sur le corps allongé. Le support d'encastrement peut également comprendre une structure distincte et séparée du corps allongé. Dans ce dernier cas, le support d'encastrement peut comprendre des organes intercalaires d'encastrement assurant une solidarisation du raidisseur sur le support d'encastrement.

Le raidisseur selon la présente invention peut en outre comporter une fourrure externe l'entourant sur une partie de sa longueur, cette fourrure étant solidarisée avec le support d'encastrement.

L'invention sera mieux comprise au moyen de la description ci-après et des figures annexées données comme des exemples non limitatifs parmi lesquels :
- la figure 1 est une vue en coupe longitudinale d'un premier exemple de réalisation de raidisseur de type connu, monté sur une conduite munie d'un embout,
- la figure 2 est une vue analogue d'un second exemple de réalisation de raidisseur de type connu, monté sur une conduite munie d'en embout.
- les figures 3a et 3b sont des vues partielles de deux variantes d'un premier exemple de réalisation de raidisseur selon la présente invention;
- les figures 4a et 4b sont des vues partielles de deux variantes d'un deuxième exemple de réalisation de raidisseur selon la présente invention;
- la figure 5 est une vue partielle d'un troisième exemple de réalisation de raidisseur selon la présente invention;
- la figure 6 est une vue partielle d'un quatrième exemple de réalisation de raidisseur selon la présente invention;
- la figure 7 est une vue partielle d'un cinquième exemple de réalisation de raidisseur selon la présente invention;
- la figure 8 est une vue partielle d'un sixième exemple de réalisation de raidisseur selon la présente invention;
- la figure 9 est une vue en coupe longitudinale du raidisseur de la figure 4, monté sur une conduite munie d'un emboût;
- la figure 10 est une vue en coupe partielle longitudinale d'un septième exemple de réalisation du raidisseur selon la présente invention;
- la figure 11 est une vue en coupe axiale d'un huitième exemple de réalisation de raidisseur selon la présente invention monté sur une conduite;
- la figure 12 est une vue en coupe axiale d'un neuvième exemple de réalisation de raidisseur selon la présente invention, monté sur une conduite;
- la figure 13 est une vue en coupe axiale d'un dizième exemple de réalisation de raidisseur selon la présente invention, monté sur une conduite.

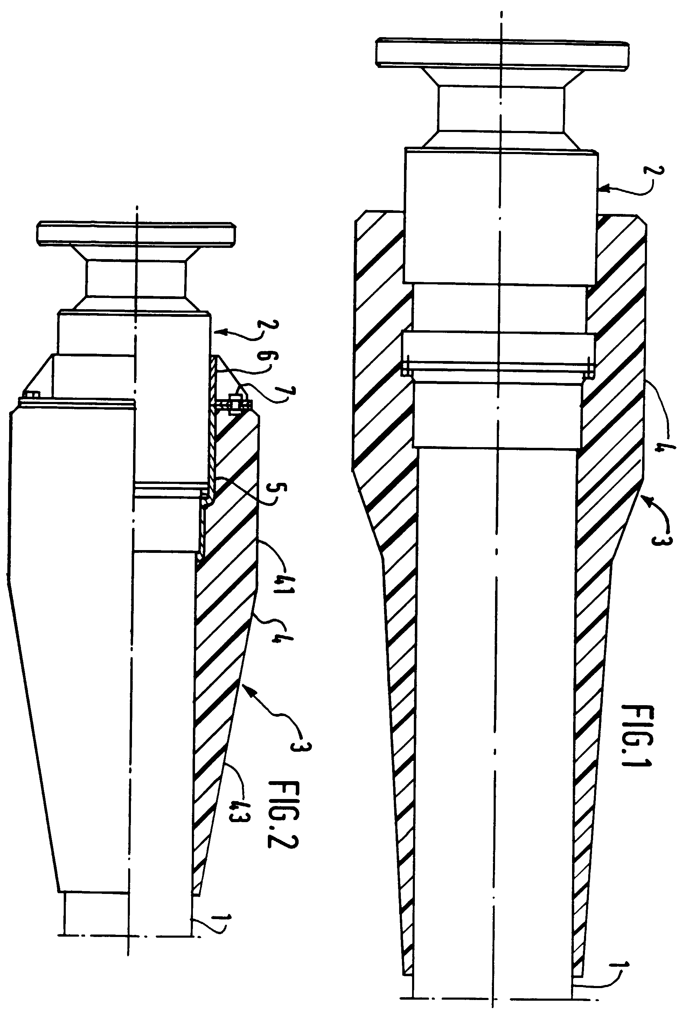

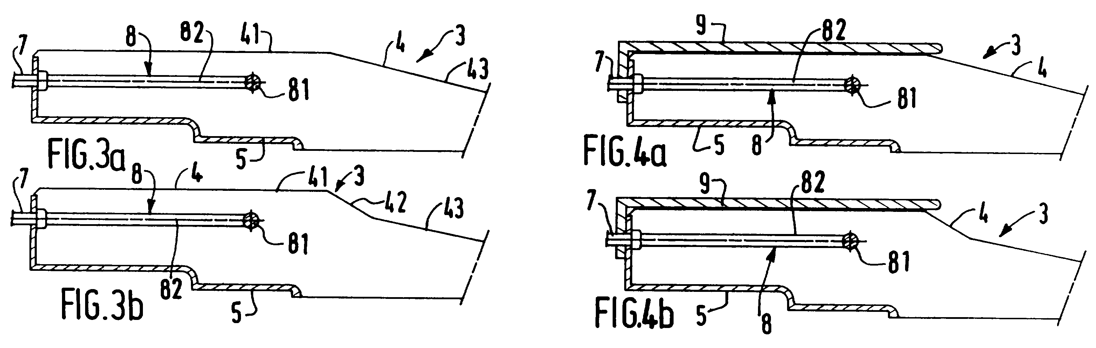

Sur la figure 1, on peut voir un raidisseur 3 de type connu monté au niveau d'un embout 2 sur un corps allongé 1, tel qu'une conduite tubulaire. Le raidisseur 3 de la figure 1 est composé d'une enveloppe de polyuréthane 4 surmoulée autour d'une partie de l'embout 2 et du corps allongé 1. Le diamètre du raidisseur diminue au fur et à mesure qu'on s'éloigne de l'embout 2. L'embout 2 constitue dans ce cas un support d'encastrement.

Sur la figure 2, on peut voir une variante de réalisation de raidisseur 3 de type connu. Le raidisseur 3 de la figure 2 comprend un élément élastique 4 en polyuréthane moulé autour d'un insert métallique 5 reprenant la forme externe de l'embout 2. L'insert 5 est solidarisé avec l'embout avantageusement par des moyens d'encastrement complémentaires soudés à l'embout et comprenant une bride 6, par l'intermédiaire d'organes de fixation 7 tels que des vis et des écrous.

L'élément élastique 4 comprend une partie arrière 41, par exemple cylindrique, correspondant à la zone d'encastrement du raidisseur sur l'embout 2, et une partie tronconique 43 dite active qui entoure le corps allongé avec un jeu minimum sur une longueur correspondant à la zone critique où la courbure doit être limitée, de sorte que le rayon de courbure du corps allongé ne puisse pas devenir inférieur à la limite fixée. En variante l'élément élastique 4 peut comprendre une partie cylindrique 41 dont l'épaisseur a été augmentée pour améliorer l'encastrement, prolongée par une partie tronconique de pente plus forte 42 assurant la transition entre la partie cylindrique et la partie tronconique active 43, comme dans les modes de réalisation de l'invention illustrés aux figures 3b et 4b.

Sur les figures 3a et 3b, on peut voir deux variantes d'un premier exemple de réalisation de raidisseur 3 selon la présente invention. Un élément élastique 4 entoure un corps allongé 1. On travaille dans la zone élastique du matériau, c'est-à-dire qu'en cas de suppression de contraintes, l'élément 4 revient sensiblement à son état initial. L'élément élastique 4 est réalisé en élastomère moulable. Avantageusement, on utilise un élastomère d'un module d'Young élevé ce qui minimise les dimensions nécessaires pour garantir un rayon de courbure minimal pour une contrainte donnée. Avantageusement, on utilise un élastomère présentant un allongement à la rupture élevé, de plusieurs centaines en pourcent. Avantageusement, on utilise un polyuréthane élastique. Avantageusement, le polyuréthane élastique a une dureté comprise entre 60 et 95 shore A typiquement 90 à 95 shore A. Dans un exemple de réalisation, l'élément élastique est constitué d'un polyuréthane dont l'élongation pour les charges maximales imposées est comprise entre 10 et 15%; le polyuréthane utilisé pouvant subir, sans rupture, des allongements de 400%. Ce polyuréthane a une dureté sensiblement égale à 95 shore A. L'augmentation de la dureté du polyuréthane augmente le retrait à la coulée et la vitesse de polymérisation. Une dureté plus faible augmente les dimensions du raidisseur et la quantité du matériau élastique utilisé.

Les raidisseurs illustrés présentent l'une des deux formes extérieures mentionnées ci-dessus.

Il est bien entendu que la présente invention n'est pas limitée à l'utilisation d'une partie d'encastrement 41, d'une partie active 43, et le cas échéant d'une partie de raccordement 42 dont la surface extérieure présente une forme de révolution respectivement cylindrique et conique telles que décrites ci-dessus. Ainsi, par exemple, la partie d'encastrement 41 peut être légèrement conique; la partie active 43 peut présenter une certaine courbure, concave ou convexe, sur tout ou partie de sa longueur, ou elle peut comporter une partie cylindrique. De même, les longueurs des parties, respectivement cylindrique et conique peuvent varier; mais dans un mode de réalisation avantageux, l'extrémité de la partie cylindrique a son raccordement avec la partie conique qui se situe approximativement au niveau, ou légèrement au-delà de l'extrémité de l'insert, ou de l'organe, tel qu'un embout ou la fourrure 9 décrite plus loin en référence aux figures 4a et 4b, ou un tube extérieur au raidisseur sur lequel ou dans lequel l'élément élastique 4 est encastré de manière à présenter une portée d'encastrement, de préférence cylindrique, dont la longueur est de préférence approximativement égale à la longueur de la partie cylindrique d'encastrement 41.

Le raidisseur selon la présente invention comporte une armature intérieure pour augmenter la rigidité en flexion et assurer une partie importante de la résistance aux efforts axiaux de traction et de compression qui affectent le raidisseur lorsque le corps allongé est mis en flexion.

Cette armature reprend pour l'essentiel les efforts axiaux de traction-compression et limite les déformations de l'élément en élastomère lorsque le corps allongé est mis en flexion.

Dans l'exemple des figures 3a et 3b, l'armature 8 est composée d'un anneau torique 81 retenu axialement par une pluralité de tirants 82, de préférence parallèles à l'axe du corps allongé, avantageusement concentriques et régulièrement répartis sur 360°. Les tirants 82 sont solidarisés par des moyens de fixation, par exemple par soudage ou comprenant des organes mécaniques de fixation 7, tels que, par exemple, un ensemble de vis et d'écrou avec un support d'encastrement. Avantageusement, le raidisseur 3 comporte un insert de préférence métallique 5, par exemple en acier.

Dans les cas où le raidisseur 3 est disposé, dans sa partie d'encastrement 41, autour d'un organe, tel qu'un embout 2 (non illustré dans les figures 3a et 3b), constituant avec des moyens d'encastrement tels que ceux illustrés à la figure 2 le support d'encastrement, il est avantageux de réaliser l'insert 5 avec une forme interne reproduisant sensiblement le contour externe de l'embout. Dans les modes de réalisation illustrés, les organes de fixation 7 sont solidarisés avec un élément annulaire radial, par exemple en forme de disque qui constitue une extension de l'insert 5 ou qui est réalisé sous la forme d'un élément indépendant solidarisé avec l'insert 5. Cette disposition permet d'assurer une bonne cohésion mécanique globale entre l'armature 8, le support d'encastrement, et l'insert 5, ce qui augmente la rigidité de l'encastrement.

En outre, il a été découvert que l'élément radial prolongeant l'insert améliore la rigidité du raidisseur en constituant une paroi qui limite les déformations de l'élément élastique 4.

La présence de l'armature 8 permet d'augmenter la rigidité en flexion au niveau de l'encastrement du raidisseur. L'armature permet d'encaisser au moins les efforts axiaux différentiels entre le côté comprimé et le côté tendu engendrant des forces de cisaillement. L'armature 8 a principalement pour rôle d'augmenter la raideur à l'encastrement de l'élément élastique 4. Notamment, il a été découvert que l'armature 8 diminue la courbure du corps allongé dans sa zone dans laquelle la courbure est la plus forte, c'est-à-dire dans la zone active conique 43 de l'élément élastique et ceci bien que, dans les modes de réalisation avantageux illustrés, l'armature 8 soit disposée dans la partie cylindrique d'encastrement 41 sans empiéter sur la partie active 43.

De façon étonnante, l'invention permet grâce à une armature, qui en elle-même ne présente pas de résistance notable à la flexion d'assurer une résistance importante à la flexion de l'ensemble constitué par l'élément élastique contenant l'armature et le corps allongé sur lequel est mis en place l'élément élastique.

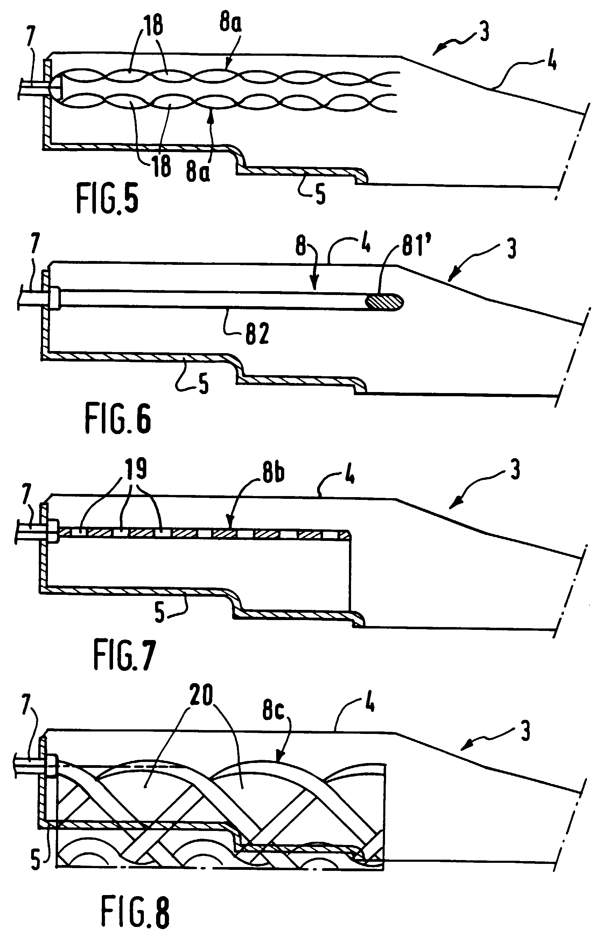

Sur les figures 4a et 4b, on peut voir deux variantes d'un autre mode de réalisation du raidisseur 3 selon la présente invention, comportant en outre une fourrure 9 disposée à la périphérie, et de préférence sur toute la longueur de la partie cylindrique d'encastrement 41 de l'élément élastique 4. La fourrure 9 est solidarisée avec un support d'encastrement, non représenté, par l'intermédiaire des organes de fixation 7. Dans l'exemple de la figure 5, la fourrure est de plus solidarisée avec un insert 5 entourant un embout, non représenté, la fourrure présentant une partie annulaire radiale en forme de disque qui est raccordée par serrage des organes de fixation 7 à l'élément radial prolongeant l'insert.

Avantageusement, on réalise le raidisseur des figures 4 et 4b par moulage d'élastomère, par exemple du polyuréthane, qui doit former la pièce élastique 4, le moulage étant, de préférence, réalisé autour de l'insert, et des éléments composant l'armature 8 étant mis en place. On fait alors polymériser le polyuréthane. La réaction, qui est exothermique, est suivie d'un refroidissement. Il se produit alors un retrait du polyuréthane qui provoque un frettage autour de l'insert 5, et qui a en même temps pour effet de créer un interstice entre l'élément élastique moulé 4 et le moule, la fourrure extérieure 9, pouvant, dans un mode de réalisation avantageux, être mise en place autour de l'élément élastique après retrait du polyuréthane. Avantageusement, l'interstice entre la fourrure et l'élément élastique moulé est rempli, par exemple en y coulant de nouveau du polyuréthane, l'opération étant complétée par la polymérisation définitive des éléments en polyuréthane. En variante, la fourrure extérieure 9 peut être utilisée comme élément de moule extérieur.

L'élément élastique 4 se trouve ainsi contenu dans sa partie cylindrique d'encastrement 41 entre les deux surfaces concentriques de l'insert 5 et de la fourrure 9. Toutefois, il n'y a pas d'adhérence entre l'élément élastique 4 et la fourrure 9. Lorsque l'élément élastique 4 fléchit, il apparaît un jeu du côté tendu, entre la fourrure 9 et l'élément élastique 4; sur le côté comprimé, la fourrure 9 constitue un épaulement permettant d'augmenter la rigidité de l'élément élastique 4 au niveau de son encastrement. De préférence, des élément radiaux prolongeant respectivement l'insert et la fourrure constituent pour l'élément élastique 4 une surface continue d'appui complémentaire, la partie cylindrique d'encastrement 41 se trouvant ainsi dans un volume clos, ce qui contribue à augmenter la rigidité du raidisseur 3.

Les raidisseurs 3 des figures 4a et 4b qui comportent l'armature 8 du raidisseur illustré sur les figures 3a et 3b et une fourrure 9 présentent des caractéristiques d'encastrement excellentes. Le raidisseur ne présente qu'un niveau relativement faible de concentration de contraintes autour de la partie annulaire 81 de l'armature 8, ce qui a pour conséquence que les matériaux constituant le raidisseur soumis à des contraintes dynamiques voient leur durée de vie augmentée. En outre, il devient ainsi possible de diminuer le volume de la pièce élastique 4 tout en assurant que le corps allongé à protéger ne subira jamais de flexion ayant un rayon de courbure inférieur à la limite imposée. En particulier, lorsque les efforts d'encastrement et/ou les efforts dynamiques sont considérables, le raidisseur selon l'invention peut être réalisé avec une rigidité beaucoup plus importante que les raidisseurs de type connu, et ceci sans nécessiter des dimensions excessives, ce qui permet d'augmenter le rayon de courbure et la durée de vie du corps allongé en service.

Il est bien entendu que l'armature 8 de l'élément élastique 4 n'est pas limitée à la forme d'un anneau torique 81 retenu par des tirants 82. Il est uniquement impératif qu'elle soit ancrée au support d'encastrement et qu'elle ne découpe pas de couronnes concentriques dans l'élément élastique 4, c'est-à-dire qu'elle laisse subsister des liaisons radiales.

D'autres exemples de réalisation d'armatures sont illustrés sur les figures 5 à 8.

Sur la figure 5, on peut voir une armature 8a composée de deux nappes concentriques de fils ou de rubans entrelacés, par exemple tissés ou tressés, comportant des mailles noyées dans l'élément élastique 4. L'élastomère traverse les nappes au niveau des ouvertures 18 de nappes, ce qui empêche le découpage de l'élément 4 en couronnes concentriques.

Dans l'exemple illustré sur la figure 6, l'armature 8 est un anneau 81 de section elliptique retenu par des tirants 82, avantageusement régulièrement répartis sur 360°. Dans l'exemple illustré sur la figure 6, les tirants 82 ont une longueur supérieure à ceux mis en oeuvre dans les exemples des figures 3a à 4b, la longueur des tirants de la figure 6 étant sensiblement égale à la longueur de la partie cylindrique de l'élément élastique 4. Avantageusement, le grand axe de l'ellipse est parallèle à l'axe du raidisseur 3. D'une manière générale, l'utilisation d'un anneau centré sur l'axe du raidisseur 3 présentant une section allongée parallèlement à cet axe se révèle avantageuse. Toutefois, des raidisseurs comportant une armature comprenant un anneau dont la section présente une étendue radiale supérieure à l'étendue parallèlement à l'axe du raidisseur ne sortent pas du cadre de la présente invention.

Sur la figure 7, on peut voir un exemple d'armature 8b ayant une forme de manchon cylindrique de faible épaisseur. Le manchon 8b comporte des ouvertures 19 remplies avec le matériau constituant l'élément élastique 4.

Sur la figure 8, on peut voir un raidisseur comportant une armature 8c formée par un treillis non serré formant une couronne cylindrique. Dans l'exemple illustré sur cette figure, l'armature 8c comporte des bandes disposées en hélices, se croisant sensiblement à 90°. Les extrémités des bandes sont fixées au moyen des organes de fixation 7. Des ouvertures 20 permettent la formation de liaisons radiales dans l'élément élastique 4.

Pour tous les modes de réalisation des armatures internes illustrées, la longueur de l'armature parallèlement à l'axe du corps allongé est inférieure ou égale à la longueur du raidisseur. De façon avantageuse, elle peut être approximativement égale à la longueur de la zone d'encastrement (partie cylindrique) 41 de l'élément élastique 4, ou un peu plus courte.

Les armatures internes, et le cas échant les fourrures externes peuvent être réalisées en tout matériau présentant la résistance mécanique requise. Elles peuvent en particulier être métalliques ou en matériau plastique et/ou comporter des fibres de renforcement.

En particulier, l'anneau 81 et les tirants 84 des armatures internes 8 et les fourrures 9 peuvent avantageusement être réalisés en acier.

Les éléments des armatures internes tels que des fils ou des rubans entrelacés de la figure 5, spiralés en treillis de la figure 8 ou tels que le manchon perforé de la figure 7 peuvent être avantageusement réalisés en un matériau comportant des fibres, comme par exemple des fibres de verre, des fibres de carbone ou des fibres aramides telles que celles vendues par la Société Du Pont de Nemours sous la marque Kevlar. Les fibres sont, soit directement noyées dans le matériau constituant l'élément élastique 4, soit elles-mêmes enrobées par une résine et groupées sous la forme, par exemple, de fils, rubans ou membranes.

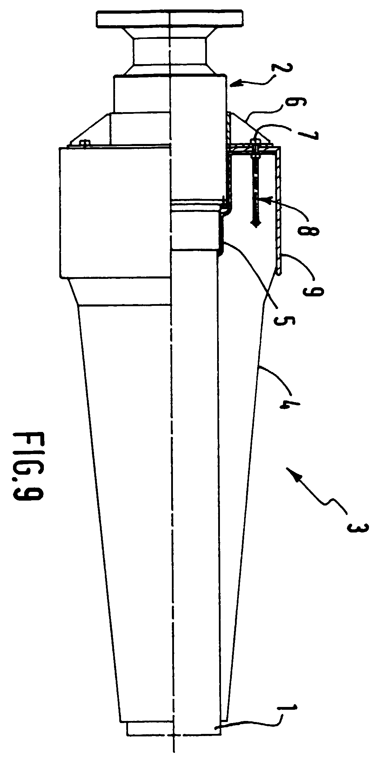

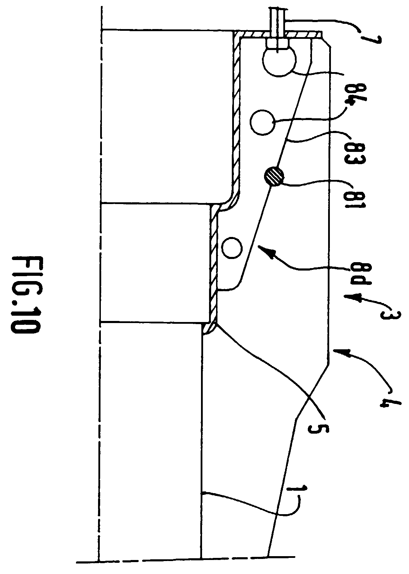

Sur la figure 9, on peut voir l'exemple de raidisseur 3 de la figure 4b selon la présente invention monté autour d'un embout 2 terminant une conduite tubulaire flexible 1. Le raidisseur 3 de la figure 10 comporte un insert 5, une armature interne 8 et une fourrure 9. L'assemblage mécanique ainsi réalisé est complété, de façon avantageuse, par un organe complémentaire d'encastrement pouvant prendre la forme, comme dans le cas de la figure 2, d'une bride 6 qui prend appui d'une part sur l'embout 2 constituant avec l'organe supplémentaire d'encastrement le support d'encastrement et d'autre part sur l'un et/ou l'autre des deux éléments radiaux en forme de disque prolongeant respectivement l'insert 5 et la fourrure 9. L'ensemble constitué par l'armature 8, la fourrure 9, l'insert 5 et la bride 6 est fermement assemblé grâce aux organes de fixation 7, par exemple par serrage d'un ensemble de boulons et d'écrous, et solidement ancré sur le support d'encastrement. Le raidisseur 3 de la figure 9 présente des performances supérieures aux raidisseurs de types connus. Il améliore la tenue de l'élément élastique 4 y compris du côté tendu. Il y a bien une concentration des contraintes du côté tendu, en particulier à l'endroit de l'anneau 81 mais une partie des efforts est encaissée par la fourrure 9. De plus, le raidisseur 3 peut être réalisé indépendamment du corps allongé sur lequel il va être monté, en temps masqué. Un éventuel défaut apparaissant lors de la réalisation d'un raidisseur 3 détecté avant le montage ne risque pas de provoquer des dommages au corps allongé à protéger. De plus, le raidisseur 3 de la figure 9 est démontable pour vérification ou remplacement. Pour effectuer le démontage, on désolidarise les organes de fixation 7 de la bride 6. On déplace le raidisseur 3 vers la droite de la figure 9, on démonte ou l'on sectionne l'embout 2 et on effectue le retrait du raidisseur 3. Après montage éventuel d'un nouveau raidisseur 3 sur un corps allongé 1, on remet l'embout 2 et on assure la solidarisation de la bride 6 avec les organes de fixation 7. Alternativement, il est également possible de remplacer, si nécessaire, le raidisseur 3 sans démonter ou sectionner l'embout, par exemple en découpant sur place l'élément élastique 4 pour le retirer, et en surmoulant un nouvel élément élastique. L'élément élastique 4 de la figure 9 comporte une surépaisseur de la partie cylindrique 41 au niveau de l'encastrement. La géométrie, notamment de l'élément élastique 4, est adaptée aux efforts que le raidisseur 3 doit pouvoir supporter. Dans un exemple de réalisation performant, le raidisseur 3 de la figure 10 est monté autour d'une conduite tubulaire flexible dont le diamètre intérieur est égal à 0,4 m et comporte un élément élastique 4 en polyuréthane dont la masse est égale à 800 kg. Il peut supporter les moments de flexion résultant de tractions de 64 tonnes, avec une déviation par rapport à l'axe de la conduite tubulaire flexible 1 de 35°. Dans un autre exemple de réalisation, le raidisseur 3 est susceptible de supporter les effets de flexion résultant d'une traction de 120 tonnes sous une inclinaison par rapport à l'axe de la conduite tubulaire flexible 1 de 20°. Dans les deux cas, la tenue de ces performances est garantie durant une période de 20 ans, mais le raidisseur selon l'invention peut également être utilisé dans les cas où les efforts appliqués et/ou les dimensions du corps allongé sont plus faibles, par exemple dans le cas de conduite flexible présentant un diamètre extérieur de l'ordre de 2 cm.

Sur la figure 10, on peut voir un autre mode de réalisation de raidisseur selon la présente invention comportant une armature 8d comprenant des membrures radiales 83, en forme de goussets allongés, avantageusement régulièrement répartis sur 360°. Avantageusement, les membrures radiales 83 soutiennent, par exemple, un anneau 81 par exemple torique, les membrures 83 et l'anneau 81 pouvant avantageusement être métalliques, par exemple en acier.

Avantageusement, les membrures radiales 83 comportent des ouvertures 84 permettant le passage du polyuréthane, de façon à assurer la continuité de la masse de polyuréthane dans le sens circonférentiel autour du corps allongé 1.

Dans l'exemple illustré sur la figure 10, les membrures solidement ancrées sur le support d'encastrement par l'intermédiaire des organes de fixation 7 sont solidarisées avec l'insert 5.

Il est bien entendu que l'anneau 81 peut prendre la section illustrée sur la figure 6 sans sortir du cadre de la présente invention. De même, il est possible d'utiliser une pluralité d'anneaux 81 placés de préférence à la périphérie des membrures 83.

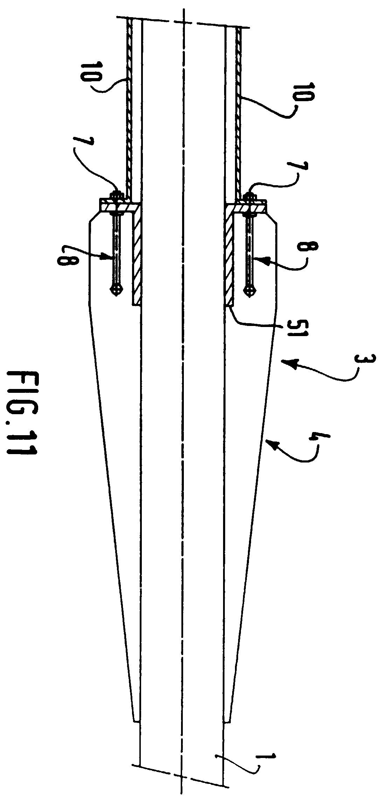

Le raidisseur selon la présente invention n'est pas nécessairement disposé à l'extrémité d'un corps allongé 1. Dans un tel cas, on peut ne pas disposer d'embouts pour réaliser l'encastrement du raidisseur 3 selon la présente invention. De tels cas de figures sont illustrés sur les figures 11, 12 et 13. Un embout se trouve par exemple en amont, à une distance égale à quelques mètres ou quelques dizaines ou centaines de mètres.

Sur la figure 11, on peut voir un raidisseur 3 selon la présente invention comportant une armature 8 fixée sur un insert 51 et entourant avec un faible jeu ou sans jeu un corps allongé 1, par exemple une conduite tubulaire flexible. L'armature 8 et l'insert 51 sont solidarisés par l'intermédiaire des organes de fixation 7 avec la bride d'extrémité d'un tube-guide rigide droit 10 qui joue ici le rôle de support d'encastrement. Dans le cas de la figure 11, le tube-guide droit 10 entoure avantageusement à jeu le corps allongé 1.

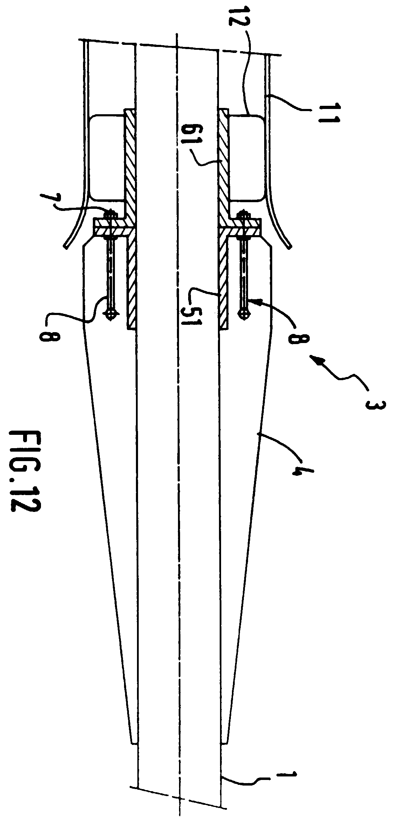

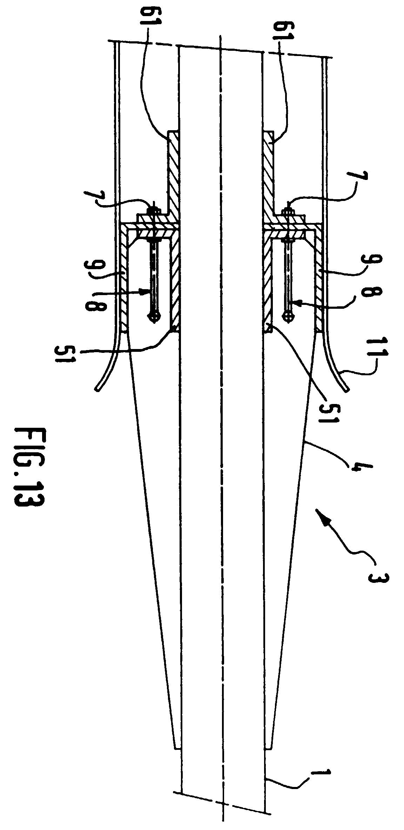

Les figures 12 et 13 correspondent au cas de la rigidification d'un corps allongé 1, par exemple une conduite tubulaire flexible en sortie d'un tube-guide 11 comportant une partie d'extrémité évasée, et pouvant présenter un diamètre interne sensiblement supérieur au diamètre extérieur du corps allongé. Le tube-guide 11 peut avoir une configuration quelconque, par exemple rectiligne et verticale (I tube), ou présentant la forme par exemple d'un arc de cercle qui constitue la partie basse d'un tube vertical et dont l'extrémité inférieure a une inclinaison qui peut être quelconque, entre 0 et 90° par rapport à la verticale (J tube).

Sur la figure 12, on a représenté une variante de montage de raidisseur selon la présente invention comportant une armature 8. Comme dans le cas de la figure 11, l'armature 8 est solidarisée par des organes de fixation 7 avec l'insert 51. Le support d'encastrement est constitué par le tube 11 et un organe complémentaire de renfort 61 qui présente la forme d'une bride prenant appui d'une part sur le corps allongé 1 et d'autre part sur un élément radial en forme de disque prolongeant l'insert 51, ainsi qu'un organe intermédiaire d'encastrement 12. L'organe intermédiaire 12 étant coincé dans l'espace annulaire qui sépare le tube 11 et l'organe de renfort 61 permet de transmettre les efforts d'encastrement radiaux entre le raidisseur 3 et le tube 11, et est constitué par une pièce annulaire rigide pouvant prendre la forme par exemple d'un collier séparable en plusieurs éléments, du type des organes appelés "clamp" en terminologie pétrolière anglo-saxonne.

Sur la figure 13, le raidisseur 3 selon la présente invention comporte outre l'armature 8 une fourrure externe 9. Dans ce cas, il est avantageux d'effectuer l'encastrement du raidisseur 3 selon la présente invention, dans le tube 11 par l'intermédiaire de la fourrure 9, la fourrure venant en appui sur la surface interne du tube 11 et étant réalisée de façon à transmettre les efforts radiaux d'encastrement. Dans l'exemple illustré sur la figure 13, le support de renfort comporte également un organe complémentaire de renfort présentant la forme d'un tronçon de tube à bride 61.

D'une façon générale, le raidisseur selon l'invention est utilisable chaque fois qu'un corps allongé, tel qu'une conduite tubulaire flexible, présente une zone critique sujette à des effets de flexion pouvant entraîner une diminution excessive du rayon de courbure en particulier en cas d'effets dynamiques induisant des variations du rayon de courbure, par exemple à la période de la houle. Un cas d'application typique concerne le raccordement d'une conduite tubulaire flexible avec une plate-forme de surface, un navire, une bouée ou toute autre structure mobile ou fixe, constituant un support extérieur. Le raidisseur selon l'invention peut être monté sur l'embout d'extrémité de la conduite flexible, ainsi qu'illustré sur la figure 9, l'embout constituant le support d'encastrement et étant, d'autre part, solidarisé avec la structure constituant le support extérieur. Alternativement, on peut utiliser comme support d'encastrement un collier serré autour du corps allongé. Les figures 11 à 13 illustrent des montages dans lesquels le support d'encastrement comprend une structure séparée, telle qu'un tube rigide d'acier, extérieure au corps allongé et l'entourant, les efforts d'encastrement étant transmis directement par exemple entre le tube et la fourrure entourant l'élément élastique du raidisseur, ou par l'intermédiaire d'au moins un organe intercalaire d'encastrement. Dans ce cas, le corps allongé présente, de part et d'autre du raidisseur, une première partie libre, dont la flexion est contrôlée par son appui sur la partie active du raidisseur et une deuxième partie statique rendue solidaire du support extérieur.

Quel que soit le mode de réalisation, l'élément élastique 4 du raidisseur selon l'invention comporte au moins une portée d'appui, de préférence approximativement cylindrique, sur un organe rigide qui peut être partie constituante du raidisseur ou du support d'encastrement. Ladite portée peut constituer une partie de la surface interne ou de la surface externe du raidisseur.

L'organe ridige sur lequel l'élément élastique 4 est en appui peut ainsi, dans un cas, constituer une partie de la paroi interne du raidisseur, tel qu'un insert 5 ou 51, ou être disposé à l'intérieur du raidisseur, tel qu'un embout 2 ou un collier monté autour du corps allongé 1, ou, dans l'autre cas, constituer une partie de la paroi externe du raidisseur tel qu'une fourrure 9, ou être disposé à l'extérieur du raidisseur tel qu'un tube 10 ou 11. Ainsi, par exemple, le raidisseur 3 selon l'invention peut être encastré dans un tube 10 ou 11 sans que l'on dispose d'embout ou de collier monté sur la conduite flexible, et sans utiliser un insert tel que 5 ou 51 ni de fourrure 9. Dans un tel cas, non illustré, l'élément élastique 4 étant directement en appui par sa surface cylindrique extérieure sur le support d'encastrement 10 ou 11, le dispositif d'encastrement peut comporter un organe complémentaire d'encastrement annulaire présentant une partie radiale sur laquelle l'armature, telle que 8, est fixée par des organes de fixation 7, et une partie cylindrique encastrée dans le tube 10 ou 11 est orientée en sens opposé au raidisseur 3 par rapport à ladite partie radiale. Avantageusement, le raidisseur 3 comporte deux portées d'appui de l'élément élastique 4, chacune de ces surfaces d'appui constituent une partie des surfaces, respectivement, interne et externe de l'élément élastique 4, ainsi qu'illustré par les figures 4, 9 et 13.

Toutefois, on ne sort pas du cadre de la présente invention si le raidisseur est disposé entre deux parties libres du corps allongé, chaque partie étant mobile et sujette à des déformations, en particulier par flexion. Ceci concerne, par exemple, le cas où le corps allongé est saisi ponctuellement, par exemple par un support extérieur ou par un organe de retenue tel qu'un câble, ou encore le cas où un organe particulièrement lourd doit être fixé sur le corps allongé. Dans ce dernier cas, l'organe lourd joue alors, du fait de son inertie, le rôle du support extérieur auquel le corps allongé est relié par l'encastrement du raidisseur dans le support d'encastrement. En outre, les fonctions de support d'encastrement et de support extérieur qui ont ici été dissociées pour clarifier la description peuvent être confondues en un seul et même organe support.

L'invention s'applique notamment à la limitation de la flexion de corps allongés tels que conduites tubulaires flexibles, ombilicaux, câbles électriques, ou câbles d'ancrage; elle s'applique aussi bien à des corps allongés constitués par l'assemblage en faisceau de plusieurs conduites tubulaires flexibles et/ou câbles électriques ou autres canalisations tels que fibres optiques, lesdits faisceaux (par exemple un riser multiple, ou une ligne ombilicale) pouvant être composés de lignes assemblées parallèles ou de lignes assemblées en hélice.

Bien que les exemples décrits ci-dessus concernent le cas de corps allongés présentant une section circulaire, le raidisseur présente alors, de préférence, une configuration axisymétrique, le raidisseur selon l'invention peut être réalisé de façon à s'adapter à un corps allongé de section quelconque, par exemple elliptique, ou rectangulaire (par exemple dans le cas de faisceaux plats), ou polygonale. Dans un tel cas, le raidisseur selon l'invention peut être réalisé de façon à présenter une surface interne exactement complémentaire du corps allongé et, le cas échéant, du support d'encastrement tel qu'un embout autour duquel il est disposé, le corps élastique pouvant avoir une épaisseur variable dans une section donnée perpendiculaire à l'axe du corps allongé, et les différents éléments de l'armature pouvant également présenter une disposition générale et un dimensionnement adaptés de façon convenable, de façon à obtenir les caractéristiques de flexion désirées. Alternativement, il est possible de réaliser le raidisseur selon l'invention en lui donnant une configuration générale axisymétrique avec un élément élastique de révolution; un tel dispositif peut être réalisé en intercalant des moyens d'appui radial présentant une surface interne complémentaire de la surface extérieure, quelconque, du corps allongé et, par exemple, de l'embout, et une surface extérieure de révolution enveloppée par la surface interne du raidisseur, lesdits moyens d'appui radial ayant pour caractéristique de transmettre les efforts radiaux tout en ne subissant que très peu de déformation.

L'invention s'applique principalement à l'exploitation pétrolière sous-marine.

## Revendications

1. Raidisseur comportant un élément élastique en élastomère destiné à entourer un corps allongé à rigidifier, ledit élément élastique pouvant être rendu solidaire d'un support d'encastrement comportant notamment un embout monté sur ledit corps allongé ou un tube rigide entourant ledit corps allongé, ledit raidisseur comportant une armature (8,8a,8b,8c,8d) s'étendant à l'intérieur dudit élément élastique (4), sur une partie de la longueur de celui-ci, depuis une extrémité de l'élément élastique, et des moyens de fixation (7) pour solidariser ladite armature au-dit support d'encastrement (2,6 ; 10 ; 11,12,61), à son extrémité située au niveau de ladite extrémité de l'élément élastique, caractérisé par le fait que ladite armature (8, 8a, 8b, 8c, 8d) est axialement continue sur toute sa longueur.

2. Raidisseur selon la revendication 1, caractérisé par le fait que ladite armature intérieure (8,8d) comporte au moins un anneau (81) situé à distance de ladite extrémité de l'élément élastique et une pluralité de tirants (82) ou de membrures radiales (83) reliées audit anneau et s'étendant depuis ladite extrémité de l'élément élastique.

3. Raidisseur selon la revendication 1, caractérisé par le fait que ladite armature intérieure comporte au moins une nappe, et de préférence deux nappes concentriques, de fils ou rubans entrelacés (8a) s'étendant depuis ladite extrémité de l'élément élastique.

4. Raidisseur selon la revendication 1, caractérisé par le fait que ladite armature intérieure comporte un manchon (8b) pourvu d'ouvertures (19) et s'étendant depuis ladite extrémité de l'élément élastique.

5. Raidisseur selon la revendication 1, caractérisé par le fait que ladite armature intérieure comporte un treillis non serré formant une couronne cylindrique (8c) s'étendant depuis ladite extrémité de l'élément élastique.

6. Raidisseur selon l'une quelconque des revendications précédentes, caractérisé par le fait qu'il comporte en outre une fourrure extérieure (9) ceinturant ledit élément élastique depuis ladite extrémité de celui-ci.

7. Raidisseur selon la revendication 6, caractérisé par le fait que ladite fourrure est apte à être solidarisée au-dit support d'encastrement.

8. Raidisseur selon la revendication 7, caractérisé par le fait que ladite fourrure est apte à être solidarisée au support d'encastrement à son extrémité située au niveau de ladite extrémité de l'enveloppe élastique par les moyens de fixation (7) permettant de solidariser ladite armature intérieure dudit support d'encastrement.

9. Raidisseur selon l'une quelconque des revendications précédentes, caractérisé par le fait qu'il comporte un insert (5,51) s'étendant à la périphérie intérieure de l'élément élastique depuis ladite extrémité de celui-ci.

10. Raidisseur selon la revendication 9, caractérisé par le fait que ledit insert est apte à être solidarisé au-dit support d'encastrement.

11. Raidisseur selon la revendication 10, caractérisé par le fait que ledit insert est apte à être solidarisé au-dit support d'encastrement à son extrémité située au niveau de ladite extrémité de l'élément élastique par les moyens de fixation (7) permettant de solidariser ladite armature intérieure (8,8a,8b,8c) au-dit support d'encastrement.

12. Raidisseur selon l'une quelconque des revendications précédentes, caractérisé par le fait que l'élément élastique est réalisé en un élastomère moulable dont la dureté shore A est supérieure ou égale à 60.

13. Raidisseur selon la revendication 12, caractérisé par le fait que l'élément élastique est réalisé en polyuréthanne.

14. Procédé dans lequel est réalisé un raidisseur selon la revendication 6, caractérisé par le fait que l'on moule un élément élastique en élastomère (4) autour d'une armature intérieure (8,8a,8b,8c,8d), qu'on fait polymériser l'élastomère dont le retrait provoque l'apparition d'un interstice entre l'élément élastique moulé et le moule, qu'on met en place une fourrure extérieure (9) autour de l'élément élastique moulé, qu'on introduit de l'élastomère liquide entre l'élément élastique moulé et la fourrure, que l'on fait polymériser l'ensemble des matériaux élastomères, et que, pour solidariser le raidisseur à un support d'encastrement on met en place des moyens de fixation (7) sur ladite armature à son extrémité située au niveau de l'extrémité de l'élément élastique.

15. Procédé dans lequel est réalisé un raidisseur selon la revendication 6, caractérisé par le fait qu'on moule un élément élastique en élastomère (4) autour d'une armature intérieure (8,8a,8b,8c,8d) en utilisant comme moule extérieur la fourrure extérieure (9), qu'on fait polymériser l'élastomère dont le retrait provoque l'apparition d'un interstice entre l'élément élastique moulé et le moule, qu'on introduit de l'élastomère liquide entre l'élément élastique moulé et la fourrure, qu'on fait polymériser l'ensemble des matériaux élastomères, et que, pour solidariser le raidisseur à un support d'encastrement on met en place des moyens de fixation (7) sur ladite armature à son extrémité située au niveau de l'extrémité de l'élément élastique.

## Patentansprüche

1. Versteifung mit einem elastischen Kunststoffelement, das dazu vorgesehen ist, einen langgestreckten, zu versteifenden Körper zu umgeben und das fest mit einem Einbauträger verbunden werden kann, der insbesondere eine auf dem langgestreckten Körper angebrachte Manschette oder ein den langgestreckten Körper umgebendes steifes Rohr aufweist, wobei die Versteifung eine Bewehrung (8, 8a, 8b, 8c, 8d), die sich im Inneren des elastischen Elements (4) über einen Teil der Länge desselben bis zu einem Ende dieses elastischen Elements erstreckt, und Befestigungsmittel (7) zum Verbinden der Bewehrung mit dem Einbauträger (2, 6, 10, 11, 12, 61) an seinem Ende, das im Bereich des genannten Endes des elastischen Elements liegt, aufweist, **dadurch gekennzeichnet,** daß die Bewehrung (8, 8a, 8b, 8c, 8d) über ihre gesamte Länge in axialer Richtung durchgeht.

2. Versteifung nach Anspruch 1, **dadurch gekennzeichnet,** daß die Innenbewehrung (8, 8d) mindestens einen entfernt vom genannten Ende des elastischen Elements liegenden Ring (81) und mehrere Zugstäbe (82) oder Radialrippen (83) aufweist, die mit dem Ring verbunden sind und sich bis zum genannten Ende des elastischen Elements erstrecken.

3. Versteifung nach Anspruch 1, **dadurch gekennzeichnet,** daß die Innenbewehrung mindestens eine Lamelle, bevorzugt zwei konzentrische Lamellen, aus verflochtenen Fäden oder Bändern (8a) aufweist, die sich bis zum genannten Ende des elastischen Elements erstreckt.

4. Versteifung nach Anspruch 3, **dadurch gekennzeichnet,** daß die Innenbewehrung einen mit Löchern (19) versehenen Mantel (8b) aufweist, der sich bis zum genannten Ende des elastischen Elements erstreckt.

5. Versteifung nach Anspruch 1, **dadurch gekennzeichnet,** daß die Innenbewehrung ein offenes Gitter aufweist, das eine zylindrische Einfassung (8c) bildet, die sich bis zum genannten Ende des elastischen Elements erstreckt.

6. Versteifung nach einem der vorstehenden Ansprüche, **dadurch gekennzeichnet,** daß sie außerdem eine Außenummantelung (9) aufweist, die das elastische Element bis zum genannten Ende desselben umschließt.

7. Versteifung nach Anspruch 6, **dadurch gekennzeichnet,** daß die Ummantelung fest mit dem Einbauträger verbindbar ist.

8. Versteifung nach Anspruch 7, **dadurch gekennzeichnet,** daß die Ummantelung am Ende, das im Bereich des genannten Endes des elastischen Elements liegt, durch Befestigungsmittel (7) fest mit dem Einbauträger verbunden werden kann, die es ermöglichen, die Innenbewehrung des Einbauträgers fest anzuschließen.

9. Versteifung nach einem der vorstehenden Ansprüche, **dadurch gekennzeichnet,** daß sie einen Einsatz (5, 51) aufweist, der sich am Innenumfang des elastischen Elements bis zum genannten Ende desselben erstreckt.

10. Versteifung nach Anspruch 9, **dadurch gekennzeichnet,** daß der Einsatz fest mit dem Einbauträger verbunden werden kann.

11. Versteifung nach Anspruch 10, **dadurch gekennzeichnet,** daß der Einsatz an seinem Ende, das im Bereich des genannten Endes des elastischen Elements liegt, durch Befestigungsmittel (7) fest mit dem Einbauträger verbunden werden kann, die es ermöglichen, die Innenbewehrung (8, 8a, 8b, 8c) fest mit dem Einbauträger zu verbinden.

12. Versteifung nach einem der vorstehenden Ansprüche, **dadurch gekennzeichnet,** daß das elastische Element aus einem gießbaren Elastomer besteht, dessen Shorehärte A 60 oder höher ist.

13. Versteifung nach Anspruch 12, **dadurch gekennzeichnet,** daß das elastische Element aus Polyurethan besteht.

14. Verfahren zum Herstellen einer Versteifung nach Anspruch 6, **dadurch gekennzeichnet,** daß ein elastisches Element (4) aus einem Elastomer um eine Innenbewehrung (8, 8a, 8b, 8c, 8d) gegossen wird, das Elastomer polymerisiert wird, dessen Zusammenziehen das Auftreten eines Zwischenraums zwischen dem gegossenen elastischen Element und der Gießform bewirkt, eine Außenummantelung (9) um das gegossene elastische Element herum angebracht wird, ein flüssiges Elastomer swichen das gogossene elastische Element und die Ümmantelung eingefüllt wird, alle elastomeren Materialien polymerisiert werden und, um die Versteifung fest mit einem Einbauträger zu verbinden, Befestigungsmittel (7) auf der genannten Bewehrung an ihrem Ende, das im Bereich des Endes des elastischen Elements liegt, angebracht werden.

15. Verfahren zum Herstellen einer Versteifung nach Anspruch 6, **dadurch gekennzeichnet,** daß ein elastisches Element (4) aus einem Elastomer dadurch um eine Innenbewehrung (8, 8a, 8b, 8c, 8d) gegossen wird, daß als äußere Gießform die Außenunmantelung (9) verwendet wird, das Elastomer polymerisiert wird, dessen Zusammenziehen das Auftreten eines Zwischenraums zwischen dem gegossenen elastischen Element und der Gießform hervorruft, ein flüssiges Elastomer zwischen das gegossene elastische Element und die Ümmantelung eingefüllt wird, alle elastomeren Materialien polymerisiert werden und, um die Versteifung fest mit einem Einbauträger zu verbinden, Befestigungsmittel (7) auf der genannten Bewehrung an ihrem Ende, das im Bereich des Endes des elastischen Elements liegt, angebracht werden.

## Claims

1. Stiffener comprising an elastic member made of elastomer intended to surround an elongate body to be stiffened, it being possible for the said elastic member to be integrally attached to a housing support, comprising, in particular, an end terminal mounted on the said elongate body or a rigid tube surrounding the said elongate body, the said stiffener comprising a reinforcement (8, 8a, 8b, 8c, 8d) extending inside the said elastic member (4) over a portion of the length thereof from one end of the elastic member, and fastening means (7) for fastening the said reinforcement to the said housing support (2, 6; 10; 11, 12, 61) at its end situated at the said end of the elastic member, characterized in that the said reinforcement (8, 8a, 8b, 8c, 8d) is axially continuous over its entire length.

2. Stiffener according to Claim 1, characterized in that the said internal reinforcement (8, 8d) comprises at least one ring (81) situated at a distance from the said end of the elastic member and a plurality of tie rods (82) or of radial ribs (83) connected to the said ring and extending from the said end of the elastic member.

3. Stiffener according to Claim 1, characterized in that the said internal reinforcement comprises at least one sheet, and preferably two concentric sheets of interwoven yarns or ribbons (8a) extending from the said end of the elastic member.

4. Stiffener according to Claim 1, characterized in that the said internal reinforcement comprises a sleeve (8b) provided with openings (19), and extending from the said end of the elastic member.

5. Stiffener according to Claim 1, characterized in that the said internal reinforcement comprises a loose grid forming a cylindrical crown ring (8c) extending from the said end of the elastic member.

6. Stiffener according to any one of the preceding claims, characterized in that it additionally comprises an external bushing (9) girding the said elastic member, from the said end thereof.

7. Stiffener according to Claim 6, characterized in that the said bushing can be integrally attached to the said housing support.

8. Stiffener according to Claim 7, characterized in that the said bushing can be integrally attached to the housing support at its end situated at the said end of the elastic member by the fastening means (7) which allow the said internal reinforcement to be integrally attached to the said housing support.

9. Stiffener according to any one of the preceding claims, characterized in that it comprises an insert (5, 51) extending to the internal periphery of the elastic member from the said end thereof.

10. Stiffener according to Claim 9, characterized in that the said insert can be integrally attached to the said housing support.

11. Stiffener according to Claim 10, characterized in that the said insert can be integrally attached to the said housing support at its end situated at the said end of the elastic member by the fastening means (7) allowing the said internal reinforcement (8, 8a, 8b, 8c) to be integrally attached to the said housing support.

12. Stiffener according to any one of the preceding claims, characterized in that the elastic member is made of a mouldable elastomer whose Shore A hardness is higher than or equal to 60.

13. Stiffener according to Claim 12, characterized in that the elastic member is made of polyurethane.

14. Process in which stiffener according to Claim 6 is produced, characterized in that an elastic member made of elastomer (4) is moulded around an internal reinforcement (8, 8a, 8b, 8c, 8d), that the elastomer whose shrinkage causes the appearance of an interstice between the moulded elastic member and the mould is polymerized, that an external bushing (9) is fitted around the moulded elastic member, that liquid elastomer is introduced between the moulded elastic member and the bushing and that all the elastomeric materials are polymerized and that, in order to integrally attach the stiffener to a housing support, fastening means (7) are fitted to the said reinforcement at its end situated at the end of the elastic member.

15. Process in which a stiffener according to Claim 6 is produced, characterized in that an elastic member made of elastomer (4) is moulded around an internal reinforcement (8, 8a, 8b, 8c, 8d) by employing the external bushing (9) as an outer mould, that the elastomer whose shrinkage causes the appearance of an interstice between the moulded elastic member and the mould is polymerized that liquid elastomer is introduced between the moulded elastic member and the bushing, that all the elastomeric materials are polymerized and that, in order to integrally attach the stiffener to a housing support, fastening means (7) are fitted to the said reinforcement at its end situated at the end of the elastic member.
